# EUROPEAN PATENT APPLICATION

(11) **EP 4 718 552 A1**
(43) Date of publication of application: **01.04.2026**
(21) Application number: 25197371.5
(22) Date of filing: 21.08.2025
(51) Int. Cl.: H01M 10/04, H01M 50/103, H01M 50/176, H01M 50/474, H01M 50/477, H01M 50/55, H01M 50/553, H01M 50/564, H01M 50/566

(54) **ELECTRICAL ENERGY STORAGE DEVICE AND MANUFACTURING METHOD FOR THE SAME**

(30) Priority: 26.09.2024 JP 2024166846
(71) Applicant: Prime Planet Energy & Solutions, Inc., Chuo-ku, Tokyo 103-0022 (JP)
(72) Inventor: SAKASHITA, Shungo, Tokyo, 103-0022 (JP); MIYAMURA, Yukinobu, Tokyo, 103-0022 (JP)
(74) Representative: Kuhnen & Wacker Patent- und Rechtsanwaltsbüro PartG mbB

(57) **Abstract**

The present disclosure provides a manufacturing method for an electrical energy storage device (100) including an electrode body (20), a case (10), a first electrode terminal (30) attached to a bottom wall (12a) of the case (10), and a spacer (80). This manufacturing method includes a step of integrating a first current collecting member (50) attached to the electrode body (20) with the spacer (80), a step of inserting the electrode body (20) integrated with the spacer (80) into a case main body (12), and a step of joining the first current collecting member (50) and the first electrode terminal (30).

## Description

### BACKGROUND OF THE DISCLOSURE

### 1. Field

The present disclosure relates to an electrical energy storage device and a manufacturing method for the same.

### 2. Background

The specification of Chinese Utility Model No. 219017869 discloses an electrical energy storage device including an electrode body that includes a first electrode and a second electrode, a case that accommodates the electrode body, and a first electrode terminal that is electrically connected to the first electrode and is attached to a bottom wall of the case. According to the specification of Chinese Utility Model No. 219017869, an electrode tab (a first current collecting member) provided in the first electrode is joined to the first electrode terminal in the case by welding or the like.

### SUMMARY

If the first electrode terminal is attached to the bottom wall of the case, when the first current collecting member and the first electrode terminal are joined together, it is difficult to bring these members into contact with each other stably in the case, making the joining more difficult, which is a problem. In view of this, it has been demanded to provide an electrical energy storage device with high conduction reliability by joining the first current collecting member and the first electrode terminal stably.

The present disclosure has been made in view of the above circumstances, and a main object thereof is to provide an electrical energy storage device with high conduction reliability.

The present disclosure provides a manufacturing method for an electrical energy storage device including an electrode body that includes a first electrode and a second electrode, a case that accommodates the electrode body, and a first electrode terminal that is electrically connected to the first electrode through a first current collecting member, wherein the case includes a case main body with a bottomed tubular shape that includes a bottom wall, side walls provided at an outer periphery of the bottom wall, and an opening facing the bottom wall, and a sealing plate that seals the opening of the case main body, the first electrode terminal is attached to the bottom wall of the case main body, and a spacer disposed between the bottom wall and the electrode body is further provided, the manufacturing method including: an assembling step of disposing the spacer at an end part, on one side, of the electrode body to which the first current collecting member is attached, and integrating the first current collecting member with the spacer; an inserting step of inserting the electrode body integrated with the spacer from the end part on the one side into the case main body; and a joining step of joining the first current collecting member and the first electrode terminal after the inserting step.

With the aforementioned method, the first current collecting member and the first electrode terminal can be joined together stably and the conduction reliability of a joining part can be improved. Accordingly, the electrical energy storage device with high reliability can be achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device according to one embodiment;
FIG. 2 is a schematic longitudinal cross-sectional view taken along line II-II in FIG. 1;
FIG. 3 is a partial enlarged view of a main part of FIG. 2;
FIG. 4 is a schematic longitudinal cross-sectional view taken along line IV-IV in FIG. 1;
FIG. 5 is a schematic view illustrating a structure of an electrode body;
FIG. 6 is an exploded perspective view schematically illustrating a united object;
FIG. 7A is a plan view schematically illustrating a spacer, and FIG. 7B is a perspective view schematically illustrating the spacer;
FIG. 8A is an explanatory view of an inserting step, and FIG. 8B is a partial enlarged view of a vicinity of a positive electrode terminal, which is a main part;
FIG. 9 is an explanatory view of a joining step;
FIG. 10 is an explanatory view of an assembling step according to a first modification;
FIG. 11 is an explanatory view of an assembling step according to a second modification; and
FIG. 12 is a partial enlarged view of a vicinity of a positive electrode terminal in the modification.

### DETAILED DESCRIPTION OF THE PREFERRED EMBODIMENTS

Hereinafter, some preferred embodiments of the art disclosed herein will be described with reference to the drawings. Incidentally, matters other than matters particularly mentioned in the present specification, and necessary for the implementation of the art disclosed herein (for example, the general configuration and manufacturing process of an electrical energy storage device that do not characterize the art disclosed herein) can be grasped as design matters of those skilled in the art based on the conventional art in the relevant field. The art disclosed herein can be implemented on the basis of the disclosure of the present specification and common technical knowledge in the relevant field. Moreover, in the present specification, the notation "A to B" for a range signifies "a value more than or equal to A and less than or equal to B", and is meant to encompass also the meaning of being "more than A" and "less than B".

### [Electrical energy storage device]

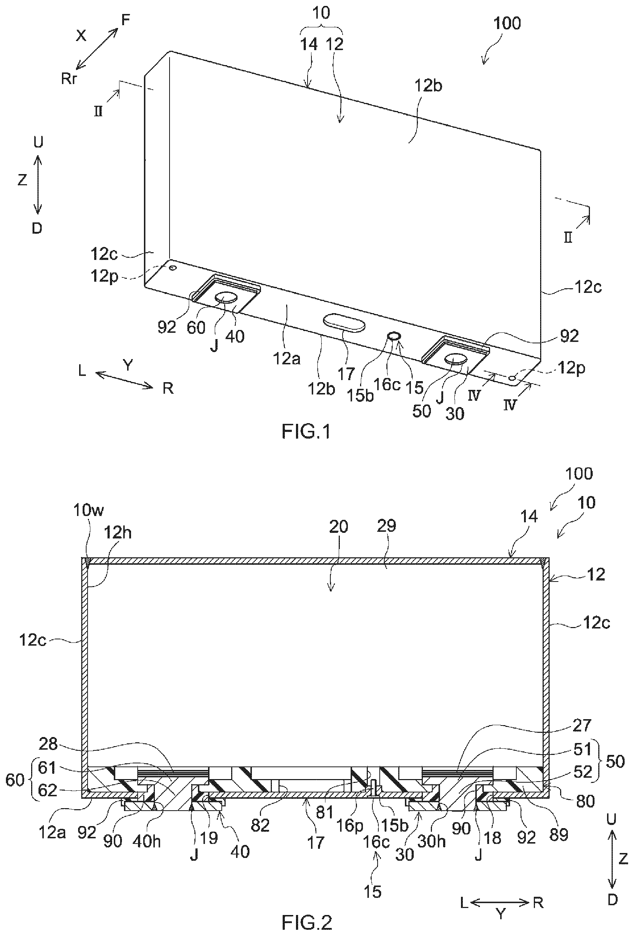

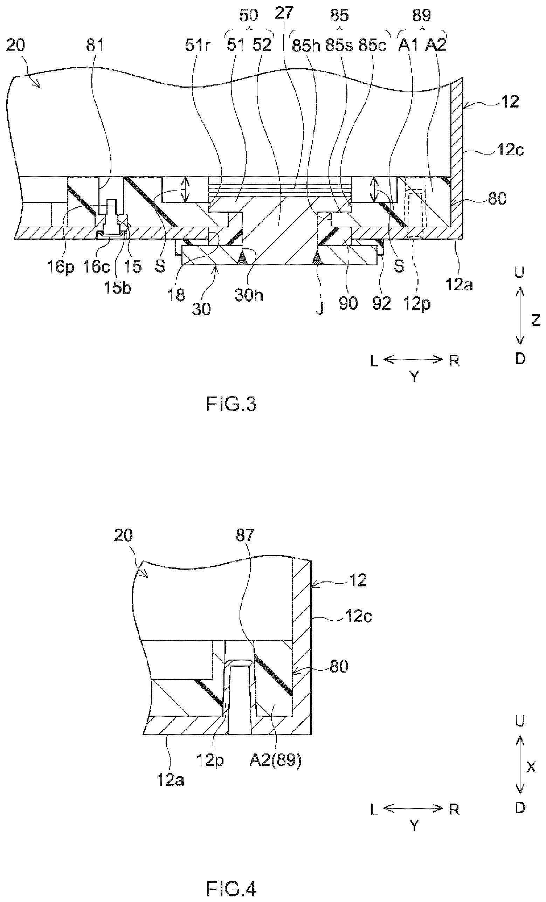

FIG. 1 is a perspective view schematically illustrating an electrical energy storage device 100 according to one embodiment. FIG. 2 is a schematic longitudinal cross-sectional view taken along line II-II in FIG. 1. FIG. 3 is a partial enlarged view of a main part of FIG. 2. FIG. 4 is a schematic longitudinal cross-sectional view taken along line IV-IV in FIG. 1. In the following description, reference signs L, R, F, Rr, U, and D in the drawings respectively denote left, right, front, rear, up, and down. In addition, a reference sign X in the drawings denotes a short side direction (thickness direction) of the electrical energy storage device 100, a reference sign Y denotes a long side direction of the electrical energy storage device 100 that is orthogonal to the short side direction, and a reference sign Z denotes an up-down direction of the electrical energy storage device 100. The up-down direction Z can be a direction that coincides with a vertical direction. These directions are defined however for convenience of explanation, and do not limit the manner in which the electrical energy storage device 100 is disposed.

Note that the term "electrical energy storage device" in this specification refers to general devices that can be repeatedly charged and discharged as a result of the transfer of charge carriers between a positive electrode and a negative electrode through an electrolyte. The electrolyte may be any one of a liquid electrolyte (electrolyte solution), a gel electrolyte, and a solid electrolyte. The electrical energy storage device is a term that encompasses a secondary battery such as a lithium ion secondary battery or a nickel-hydrogen secondary battery, and moreover, a capacitor using a chemical reaction, such as a lithium ion capacitor or a pseudo-capacitor.

As illustrated in FIG. 2, the electrical energy storage device 100 includes a case 10, an electrode body 20, a positive electrode terminal 30, a negative electrode terminal 40, a positive electrode current collecting member 50, a negative electrode current collecting member 60, and a spacer 80. The electrical energy storage device 100 further includes a liquid electrolyte (electrolyte solution, which is not illustrated) here. The electrical energy storage device 100 is a nonaqueous electrolyte secondary battery here. The electrical energy storage device 100 is preferably a secondary battery such as a lithium ion secondary battery.

The case 10 is a housing that accommodates the electrode body 20. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is preferably formed of metal and is more preferably formed of, for example, aluminum, an aluminum alloy, iron, an iron alloy, or the like. As illustrated in FIG. 2, the case 10 includes a case main body 12 and a sealing plate (lid body) 14. The case 10 (the case main body 12 and the sealing plate 14) has the size in accordance with the size of the electrode body 20 and the number of electrode bodies 20 to be accommodated (one, or more than one), for example.

The case main body 12 has a bottomed tubular shape including a bottom wall, side walls provided at an outer periphery of the bottom wall, and an opening facing the bottom wall. The case main body 12 is a bottomed square container having an opening 12h at an upper surface thereof here. Specifically, as illustrated in FIG. 1, the case main body 12 has a bottomed square tubular shape including a bottom wall 12a (a first wall) with a substantially rectangular shape including long sides and short sides, a pair of long side walls 12b (a second wall and a third wall) extending from the long sides of the bottom wall 12a and facing each other, a pair of short side walls 12c (a fourth wall and a fifth wall) extending from the short sides of the bottom wall 12a and facing each other, and the opening 12h facing the bottom wall 12a (see FIG. 2). The case main body 12 preferably has a bottomed square tubular shape. The opening 12h has a substantially rectangular shape here. The bottom wall 12a forms a lower surface of the case 10.

Note that in the present specification, the term "substantially rectangular shape" encompasses, in addition to a perfect rectangular shape (rectangle), for example, an R-like shape whose corner part connecting a long side and a short side of the rectangular shape is rounded, a shape whose corner part includes a notch, and the like.

The long side wall 12b is larger in area than the short side wall 12c. In this embodiment, each of the long side walls 12b and the short side walls 12c is formed continuously from the outer periphery of the bottom wall 12a. In other words, a border part between the bottom wall 12a and the long side wall 12b is not a welded part (not joined by welding) but is a bent part. Similarly, a border part between the bottom wall 12a and the short side wall 12c is not a welded part (not joined by welding) but is a bent part. The case main body 12 with such a shape can be formed by, for example, deep drawing of one metal plate. The long side wall 12b and the short side wall 12c are examples of "the side walls".

The sealing plate 14 is attached to the case main body 12 so as to seal the opening 12h of the case main body 12. The sealing plate 14 is typically a plate-shaped member. The sealing plate 14 faces the bottom wall 12a of the case main body 12. The sealing plate 14 has a substantially rectangular shape here. The sealing plate 14 forms an upper surface of the case 10. The case 10 is integrated in such a way that the sealing plate 14 is joined (for example, joined by welding) to a periphery of the opening 12h of the case main body 12. As illustrated in FIG. 2, a joining part (for example, welding joining part) 10w is formed in an engagement part between the case main body 12 and the sealing plate 14. Thus, the case 10 is hermetically sealed (closed).

As illustrated in FIG. 2, a gas discharge valve 17, extraction holes 18 and 19, an electrolyte solution injection hole 15 (also see FIG. 3), and a protrusion part 12p (also see

FIG. 4) are provided at the bottom wall 12a of the case main body 12. The gas discharge valve 17 is a thin part that is configured to break when the pressure in the case 10 becomes more than or equal to a predetermined value so as to discharge the gas out of the case 10. Note that the gas discharge valve 17 may be provided at the sealing plate 14. The extraction holes 18 and 19 are formed on both end parts of the bottom wall 12a in the long side direction Y. The extraction holes 18 and 19 penetrate the bottom wall 12a. To the extraction holes 18 and 19, the positive electrode current collecting member 50 (specifically, a shaft part 52 to be described below) and the negative electrode current collecting member 60 (specifically, a shaft part 62 to be described below) are inserted, respectively.

The electrolyte solution injection hole 15 is a penetration hole for injecting the electrolyte solution inside the case 10 after the sealing plate 14 is assembled to the case main body 12. As illustrated in FIG. 2 and FIG. 3, a sealing plug 16p is inserted to the electrolyte solution injection hole 15 after the electrolyte solution is injected, and the electrolyte solution injection hole 15 is sealed in such a way that a sealing plug lid 16c (sealing cap) is joined (for example, joined by welding) to a periphery of the electrolyte solution injection hole 15. The sealing plug 16p is preferably made of resin. The sealing plug lid 16c is preferably made of metal and more preferably made of aluminum or an aluminum alloy, for example. The sealing plug 16p and the sealing plug lid 16c may be either integrated or separated. Note that the electrolyte solution injection hole 15 may be provided at the sealing plate 14.

The sealing plug 16p is longer in the up-down direction Z than the electrolyte solution injection hole 15 provided at the bottom wall 12a here, and protrudes to an inner surface side of the bottom wall 12a as illustrated in FIG. 3. The part of the sealing plug 16p that protrudes to the inner surface side is accommodated in a liquid injection penetration hole 81 of the spacer 80 to be described below. A tip end (upper end in FIG. 3) of the sealing plug 16p is disposed inside the liquid injection penetration hole 81 of the spacer 80. The sealing plug lid 16c is disposed so as to cover the sealing plug 16p from an outer surface side of the bottom wall 12a. The sealing plug lid 16c is disposed inside a concave part 15b that is provided so as to surround the electrolyte solution injection hole 15 here. Thus, an interference of a joining part between the sealing plug 16p and the bottom wall 12a with another member, which results in damage or breakage of the joining part, can be suppressed more.

As illustrated in FIG. 4, the protrusion part 12p is provided at an inner surface of the bottom wall 12a. The protrusion part 12p is a projection part (convex part) projecting to the inner surface side (electrode body 20 side) of the bottom wall 12a. The protrusion part 12p is a part to be inserted to a hole part 87 of the spacer 80, which will be described below, in (step 4) an inserting step in a manufacturing method to be described below. From the viewpoint of increasing the insertion property into the hole part 87, the protrusion part 12p preferably has its diameter gradually decreasing to a tip end (as being separated from the bottom wall 12a). That is to say, the protrusion part 12p preferably has a tapered shape. The protrusion part 12p can function as a positioning member for guiding the spacer 80 and the current collecting member (the positive electrode current collecting member 50 and/or the negative electrode current collecting member 60) to a desired position. From the viewpoint of increasing the positioning accuracy, the number of protrusion parts 12p is preferably more than one (two or more, for example even number) as illustrated in FIG. 1. The plurality of protrusion parts 12p are preferably disposed at a pair of corner parts on a diagonal line of the bottom wall 12a.

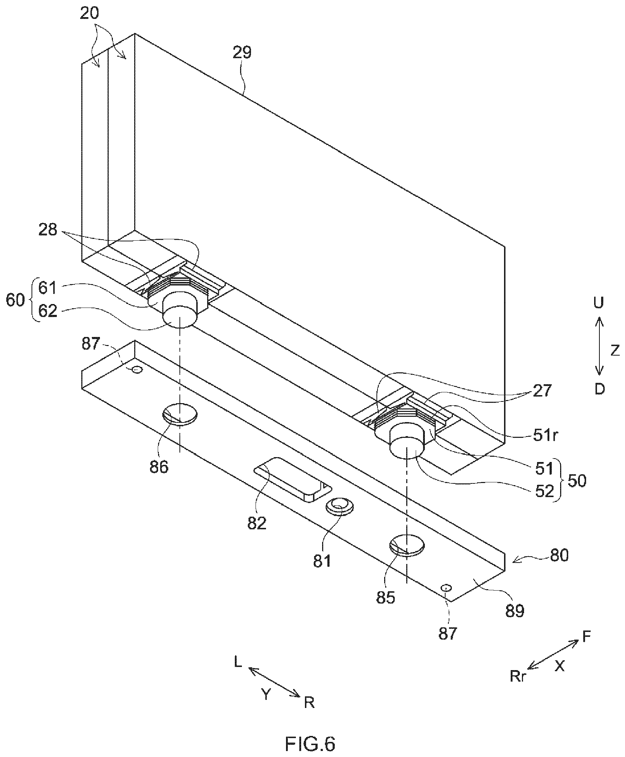

The electrode body 20 is accommodated inside the case 10. The number of electrode bodies 20 to be accommodated inside one case 10 is not limited in particular, and may one, or more than one (for example, two or more or three or more). In this embodiment, the plurality of (specifically, two) electrode bodies 20 are accommodated in one case 10 (see FIG. 6), which will be described below.

As illustrated in FIG. 2, the electrode body 20 is disposed inside the case 10 while being covered with an electrode body holder 29 made of a resin sheet here. Thus, the direct contact between the electrode body 20 and the case main body 12 is prevented. The material of the electrode body holder 29 may be the same as the conventionally used material without particular limitations. Examples of such a material include polyolefin resins such as polypropylene (PP) and polyethylene (PE), fluorine resins such as perfluoroalkoxy alkane and polytetrafluoroethylene (PTFE), and the like.

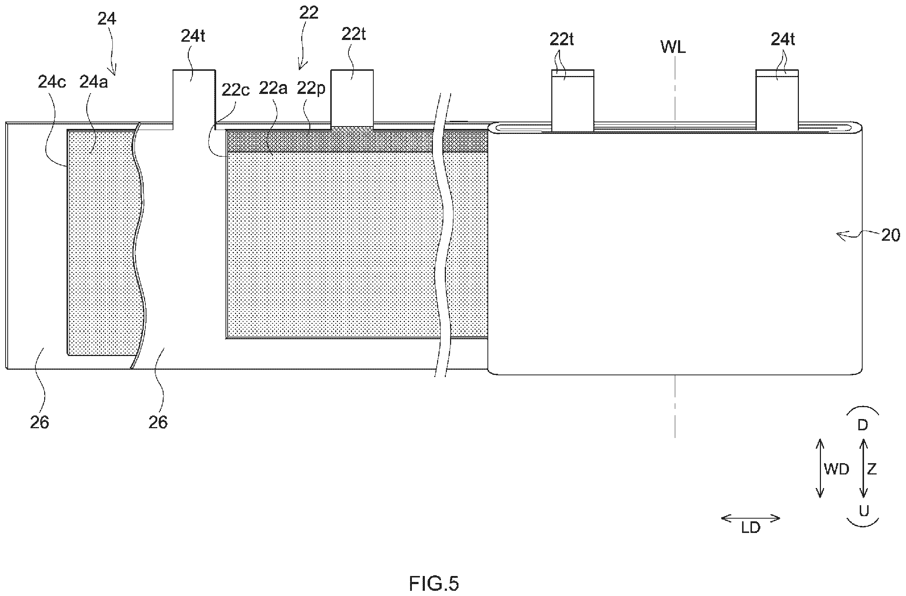

FIG. 5 is a schematic view illustrating a structure of the electrode body 20. A reference sign LD in FIG. 5 denotes a longitudinal direction of the electrode body 20 that is manufactured into the band shape. A reference sign WD denotes a direction that is substantially orthogonal to the longitudinal direction LD and corresponds to a winding axis direction of the electrode body 20.

As illustrated in FIG. 5, the electrode body 20 includes a positive electrode 22 and a negative electrode 24. In this embodiment, the electrode body 20 is a wound electrode body in which the positive electrode 22 with a band shape and the negative electrode 24 with a band shape are stacked through two separators 26 with a band shape in an insulated state and wound in the longitudinal direction LD using a winding axis WL as a center. However, the electrode body 20 may be a stack type electrode body formed in such a way that a plurality of square (typically, rectangular) positive electrodes and a plurality of square (typically, rectangular) negative electrodes are stacked in the insulated state. The electrode body 20 has a flat outer shape here. The electrode body 20 is accommodated inside the case 10 so that the winding axis WL substantially coincides with the up-down direction Z here. One of the positive electrode 22 and the negative electrode 24 is one example of "a first electrode" while the other is one example of "a second electrode".

As illustrated in FIG. 5, the positive electrode 22 includes a positive electrode current collector 22c with a band shape and a positive electrode active material layer 22a fixed on at least one surface (preferably both surfaces) of the positive electrode current collector 22c. The positive electrode 22 further includes a positive electrode protection layer 22p here. However, the positive electrode protection layer 22p is not essential and can be omitted in another embodiment. For each member of the positive electrode 22, the conventionally known materials that can be used for general electrical energy storage devices (for example, lithium ion secondary batteries) can be used without particular limitations. The positive electrode current collector 22c is preferably formed of a conductive metal such as aluminum, an aluminum alloy, nickel, or stainless steel, and here is a metal foil, specifically an aluminum foil. However, the positive electrode current collector 22c may include an insulating core body (for example, resin layer), which will also be described below in a modification (1-1).

As illustrated in FIG. 5, the positive electrode 22 includes a plurality of positive electrode tabs 22t at one end side in the winding axis direction WD. The positive electrode tabs 22t are provided with a predetermined space (intermittently) along the longitudinal direction LD. The number of positive electrode tabs 22t attached to one electrode body 20 may be several tens or more, for example, about 40 to 60. Each of the plurality of positive electrode tabs 22t has a convex shape and projects to the outside (left side in FIG. 5). The plurality of positive electrode tabs 22t have the same shape here, and each has a substantially rectangular shape. The plurality of positive electrode tabs 22t may be, however, different from each other in size or shape. The positive electrode tabs 22t are integrally provided at the positive electrode 22 here. The positive electrode tab 22t is a region where the positive electrode active material layer 22a is not formed in the positive electrode current collector 22c. The positive electrode current collector 22c is exposed in at least a part of the positive electrode tab 22t. However, the positive electrode tabs 22t and the positive electrode 22 may be different members, which will also be described in a modification (1-2) below.

The plurality of positive electrode tabs 22t are stacked at one end part of the electrode body 20 in the winding axis direction WD and form a positive electrode tab group 27 (see FIG. 2). As illustrated in FIG. 2, a tip end part of the positive electrode tab group 27 (lower end part in FIG. 2) is connected (specifically, joined) to the positive electrode current collecting member 50. The positive electrode 22 is electrically connected to the positive electrode terminal 30 through the positive electrode tab group 27 (the plurality of positive electrode tabs 22t) and the positive electrode current collecting member 50. The positive electrode 22 is preferably connected electrically to the positive electrode current collecting member 50 through the positive electrode tab group 27.

As illustrated in FIG. 5, the positive electrode active material layer 22a is provided in a band shape along the longitudinal direction LD of the positive electrode current collector 22c. The positive electrode active material layer 22a contains a positive electrode active material capable of reversibly storing and releasing the charge carriers (for example, a lithium transition metal complex oxide such as a lithium nickel cobalt manganese complex oxide). The positive electrode active material layer 22a may contain an optional component other than the positive electrode active material, for example, a conductive material, a binder, various additive components, or the like.

As illustrated in FIG. 5, the positive electrode protection layer 22p is provided in a band shape along the longitudinal direction LD of the positive electrode current collector 22c. The positive electrode protection layer 22p is provided at a border part between the positive electrode current collector 22c and the positive electrode active material layer 22a in the winding axis direction WD. The positive electrode protection layer 22p contains inorganic filler with an insulation property (for example, ceramic particles of alumina or the like). The positive electrode protection layer 22p may contain an optional component other than the inorganic filler, such as a binder, a conductive material, or various additive components. The provision of the positive electrode protection layer 22p can prevent the internal short-circuiting of the electrical energy storage device 100 due to the direct contact between the positive electrode 22 and a negative electrode active material layer 24a at the damage of the separator 26.

As illustrated in FIG. 5, the negative electrode 24 includes a negative electrode current collector 24c with a band shape and the negative electrode active material layer 24a fixed on at least one surface (preferably both surfaces) of the negative electrode current collector 24c. For each member of the negative electrode 24, the conventionally known materials that can be used for general electrical energy storage devices (for example, lithium ion secondary batteries) can be used without particular limitations. The negative electrode current collector 24c is preferably formed of a conductive metal such as copper, a copper alloy, nickel, or stainless steel, and here is a metal foil, specifically a copper foil. However, the negative electrode current collector 24c may include an insulating core body (for example, resin layer), which will also be described below in the modification (1-1).

As illustrated in FIG. 5, the negative electrode 24 includes a plurality of negative electrode tabs 24t at one end side in the winding axis direction WD. In the winding axis direction WD, the negative electrode tabs 24t are provided at an end part on the same side as the positive electrode tabs 22t (on the left side in FIG. 5). The plurality of negative electrode tabs 24t are provided with a predetermined space (intermittently) along the longitudinal direction LD. The number of negative electrode tabs 24t attached to one electrode body 20 is substantially equal to the number of positive electrode tabs 22t and can be several tens or more. Each of the plurality of negative electrode tabs 24t has a convex shape and projects to the outside (left side in FIG. 5). The plurality of negative electrode tabs 24t have the same shape here, and each has a substantially rectangular shape. The plurality of negative electrode tabs 24t may be, however, different from each other in size or shape. The negative electrode tabs 24t are integrally provided at the negative electrode 24 here. The negative electrode tab 24t is a region where the negative electrode active material layer 24a is not formed in the negative electrode current collector 24c. The negative electrode current collector 24c is exposed in at least a part of the negative electrode tab 24t. However, the negative electrode tabs 24t and the negative electrode 24 may be different members, which will also be described in the modification (1-2) below.

The plurality of negative electrode tabs 24t are stacked at one end part of the electrode body 20 in the winding axis direction WD and form a negative electrode tab group 28 (see FIG. 2). As illustrated in FIG. 2, a tip end part of the negative electrode tab group 28 (lower end part in FIG. 2) is connected (specifically, joined) to the negative electrode current collecting member 60. The negative electrode 24 is electrically connected to the negative electrode terminal 40 through the negative electrode tab group 28 (the plurality of negative electrode tabs 24t) and the negative electrode current collecting member 60. The negative electrode 24 is preferably connected electrically to the negative electrode current collecting member 60 through the negative electrode tab group 28. The electrode body 20 preferably includes the positive electrode tab group 27 and the negative electrode tab group 28 at an end part on one side.

As illustrated in FIG. 5, the negative electrode active material layer 24a is provided in a band shape along the longitudinal direction LD of the negative electrode current collector 24c. The negative electrode active material layer 24a contains a negative electrode active material capable of reversibly storing and releasing the charge carriers (for example, a carbon material such as graphite, or a silicon material). The negative electrode active material layer 24a may contain an optional component other than the negative electrode active material, for example, a binder, a dispersant, various additive components, or the like.

As illustrated in FIG. 5, the separator 26 is a member that insulates the positive electrode active material layer 22a of the positive electrode 22 and the negative electrode active material layer 24a of the negative electrode 24 from each other. The separator 26 is preferably, for example, a porous sheet made of resin including polyolefin resin such as polyethylene (PE) or polypropylene (PP). The separator 26 may include a base material part formed by a porous sheet made of resin, and a functional layer (for example, a heat resistance layer (HRL) or an adhesive layer) formed on at least one surface of the base material part. The heat resistance layer is a layer including inorganic filler and a binder, typically. As the inorganic filler, for example, alumina, boehmite, aluminum hydroxide, titania, or the like can be used. The separator 26 forms an outer surface (outermost peripheral part) of the electrode body 20 here.

The liquid electrolyte (electrolyte solution) may be any electrolyte solution used in general electrical energy storage devices (for example, lithium ion secondary batteries), without particular limitations. One example thereof is a nonaqueous electrolyte solution in which a supporting salt is dissolved in a nonaqueous solvent. Examples of the nonaqueous solvent include carbonate solvents such as ethylene carbonate, dimethyl carbonate, and ethyl methyl carbonate. One example of the supporting salt is lithium salt such as LiPF₆ and sodium salt such as NaPF₆. The electrolyte solution may contain an additive as necessary. However, the electrolyte may be in a solid form (solid electrolyte) to be integrated with the electrode body 20 in another embodiment.

As illustrated in FIG. 1 and FIG. 2, the positive electrode terminal 30 and the negative electrode terminal 40 are attached to the bottom wall 12a of the case main body 12 with the bottomed tubular shape. The positive electrode terminal 30 is attached to one end part of the bottom wall 12a in the long side direction Y (right end part in FIG. 1 and FIG. 2), specifically to a periphery of the extraction hole 18. The negative electrode terminal 40 is attached to the other end part of the bottom wall 12a in the long side direction Y (left end part in FIG. 1 and FIG. 2), specifically to a periphery of the extraction hole 19. Both the positive electrode terminal 30 and the negative electrode terminal 40 are preferably attached to the bottom wall 12a. In another embodiment, however, the bottom wall 12a may also serve as one terminal. In the case where the positive electrode 22 is "the first electrode", the positive electrode terminal 30 is one example of "a first electrode terminal". In the case where the negative electrode 24 is "the first electrode", the negative electrode terminal 40 is one example of "the first electrode terminal".

In the case 10, the terminal (the positive electrode terminal 30 and/or the negative electrode terminal 40) is provided on a surface on the side opposite to a joining part 10w between the case main body 12 and the sealing plate 14. In this manner, the terminal (preferably, the positive electrode terminal 30 and the negative electrode terminal 40) is provided at the bottom wall 12a apart from the joining part 10w. Thus, even in the application of an external force to the terminal during the use of the electrical energy storage device 100, for example, the application of a large burden on the joining part 10w can be suppressed. Therefore, the damage of the joining part 10w is suppressed and the sealability and reliability of the joining part 10w can be improved.

As illustrated in FIG. 2, the terminal (the positive electrode terminal 30 and/or the negative electrode terminal 40) is insulated from the bottom wall 12a of the case main body 12 by the insulating member (here, a gasket 90 and an external insulating member 92). The terminal is fixed to the bottom wall 12a of the case main body 12 through the gasket 90 and the external insulating member 92. The gasket 90 and the external insulating member 92 are preferably made of resin. The terminal may be attached to the bottom wall 12a together with the gasket 90 and the external insulating member 92 by a method of insert molding (integral molding). The terminal may be fixed to the bottom wall 12a together with the gasket 90 and the external insulating member 92, for example, by a caulking process or the like, or may be fixed to the bottom wall 12a through an adhesive layer (adhesive or the like). **In** addition, when the bottom wall 12a also serves as one terminal, the one terminal may be electrically connected to the bottom wall 12a directly or through another conductive member.

In an example to be described below in detail, the positive electrode 22 may be "the first electrode" but the negative electrode 24 side can also have the similar structure. **In** that case, "the positive electrode" below can be replaced by "the negative electrode" as appropriate.

The positive electrode terminal 30 is electrically connected to the positive electrode 22 of the electrode body 20 through the positive electrode current collecting member 50 as illustrated in FIG. 2 and FIG. 3. The positive electrode terminal 30 is electrically connected to the positive electrode tab group 27 of the positive electrode 22 here. The positive electrode terminal 30 is preferably formed of metal, and is more preferably formed of aluminum or an aluminum alloy, for example. In this embodiment, the positive electrode terminal 30 includes a penetration hole 30h. The penetration hole 30h is formed in a circular cylindrical shape here. To the penetration hole 30h, the positive electrode current collecting member 50 (specifically, the shaft part 52 to be described below) is inserted.

As illustrated in FIG. 2, the negative electrode terminal 40 is electrically connected to the negative electrode 24 of the electrode body 20 through the negative electrode current collecting member 60. The negative electrode terminal 40 is electrically connected to the negative electrode tab group 28 of the negative electrode 24 here. The negative electrode terminal 40 is preferably formed of metal, and is more preferably formed of copper or a copper alloy, for example. The negative electrode terminal 40 has a structure similar to that of the positive electrode terminal 30 here. The negative electrode terminal 40 includes a penetration hole 40h. The penetration hole 40h is formed in a circular cylindrical shape here. To the penetration hole 40h, the negative electrode current collecting member 60 (specifically, the shaft part 62 to be described below) is inserted.

The positive electrode current collecting member 50 is a conductive member and forms a conductive path between the positive electrode 22 (specifically, the positive electrode tab group 27) and the positive electrode terminal 30. By the provision of the positive electrode current collecting member 50 between the positive electrode tab group 27 and the positive electrode terminal 30, the electric connection can be easily kept more stably. The positive electrode current collecting member 50 is preferably formed of metal with excellent conductivity and is formed of, for example, aluminum or an aluminum alloy. The positive electrode current collecting member 50 may be formed of the metal similar to that of the positive electrode tab 22t and/or the positive electrode terminal 30. **In** the case where the positive electrode 22 is "the first electrode", the positive electrode current collecting member 50 is one example of "a first current collecting member".

As illustrated in FIG. 3, the positive electrode current collecting member 50 is inserted to a penetration hole 85h of the spacer 80, which will be described below, the extraction hole 18 of the bottom wall 12a, and the penetration hole 30h of the positive electrode terminal 30 in the order from an inner side of the case 10. The positive electrode current collecting member 50 extends from the inside of the case main body 12 (upper side in FIG. 3) to the outside (lower side in FIG. 3). The positive electrode current collecting member 50 is partially exposed to the outside of the case 10. The positive electrode current collecting member 50 is attached to the electrode body 20. The positive electrode current collecting member 50 is integrated with the spacer 80. FIG. 6 is an exploded perspective view schematically illustrating a united object including the electrode body 20, the positive electrode current collecting member 50, the negative electrode current collecting member 60, and the spacer 80.

As illustrated in FIG. 3 and FIG. 6, the positive electrode current collecting member 50 includes a flange part 51 and the shaft part 52. The flange part 51 is provided at an upper end part of the positive electrode current collecting member 50 (an end part on the electrode body 20 side). The flange part 51 is disposed inside the case 10 (specifically, the case main body 12). The outer diameter of the flange part 51 is larger than that of the shaft part 52. The flange part 51 is attached to the positive electrode tab group 27 (the plurality of positive electrode tabs 22t) and is electrically connected to the positive electrode 22. The flange part 51 is joined (for example, joined by welding such as ultrasonic welding) to the positive electrode tab group 27 (the plurality of positive electrode tabs 22t).

The flange part 51 extends along an inner surface of the bottom wall 12a here as illustrated in FIG. 3. It is preferable that the width of the flange part 51 be substantially the same as or larger than that of the positive electrode tab group 27 in the long side direction Y. The outer shape of the flange part 51 is larger than the extraction hole 18 of the bottom wall 12a here. The outer shape of the flange part 51 is larger than the penetration hole 30h of the positive electrode terminal 30 here. The flange part 51 is insulated from the bottom wall 12a of the case main body 12 by an insulating member (here, the spacer 80). The flange part 51 is engaged with a step part 85s of the spacer 80 to be described below.

As illustrated in FIG. 6, the flange part 51 has a hexagonal shape in an XY plan view here. The flange part 51 is formed so that a corner part thereof on one side in the short side direction X (rear side in FIG. 6) has a rounded shape (the shape with the corner part rounded). The flange part 51 is formed so that a corner part thereof on the other side in the short side direction X (front side in FIG. 6) is cut off. Therefore, the flange part 51 has a front-rear asymmetric shape in the short side direction X and a left-right symmetric shape in the long side direction Y here. At an outer peripheral wall of the flange part 51, an engagement concave part 51r (groove part, constriction part) is provided. The engagement concave part 51r is provided along the entire circumference of the flange part 51 here. The engagement concave part 51r has a ring shape (for example, annular shape). As illustrated in FIG. 3, an engagement convex part 85c of the spacer 80 to be described below is engaged with the engagement concave part 51r.

The shaft part 52 is provided at a lower end part of the positive electrode current collecting member 50 (an end part on the bottom wall 12a side). The shaft part 52 is a part projecting from the flange part 51. The outer shape of the shaft part 52 is smaller than that of the flange part 51. The shaft part 52 is smaller than the penetration hole 85h of the spacer 80 here, and is inserted to the penetration hole 85h. The shaft part 52 is smaller than the extraction hole 18 of the bottom wall 12a here, and is inserted to the extraction hole 18. The shaft part 52 is insulated from the bottom wall 12a of the case main body 12 by an insulating member (here, the gasket 90). The shaft part 52 is smaller than the penetration hole 30h of the positive electrode terminal 30 and is inserted to the penetration hole 30h. Thus, the electrical connection between the positive electrode terminal 30 and the positive electrode current collecting member 50 can be easily maintained more stably and the conduction reliability can be improved.

As illustrated in FIG. 6, the shaft part 52 has a columnar shape, specifically, a circular columnar shape here. The length of the shaft part 52 in the up-down direction Z is preferably shorter than the length of the protrusion part 12p provided at the bottom wall 12a in the up-down direction Z. Thus, the protrusion part 12p can suitably function as the positioning member for the spacer 80 and the current collecting member (the positive electrode current collecting member 50 and/or the negative electrode current collecting member 60). The shaft part 52 may be a projection part or the like, which will also be described in a modification (3) below. The shaft part 52 preferably has a circular shape in the XY plan view. When both the shaft part 52 and the penetration hole 30h of the positive electrode terminal 30 have a circular shape in the XY plan view, the insertion property of the shaft part 52 and the airtightness of the penetration hole 30h after the shaft part 52 is inserted can be increased. Accordingly, the reliability of the electrical energy storage device 100 can be improved.

The shaft part 52 extends from the inside of the case 10 to the outside here as illustrated in FIG. 3. A lower end part of the shaft part 52 is exposed to the outside of the case main body 12 (to the outer surface side of the bottom wall 12a) here. The lower end part of the shaft part 52 exists within the penetration hole 30h here. A lower end surface of the shaft part 52 is substantially flush with a lower end surface (surface on the outside) of the positive electrode terminal 30 here (error in manufacture or the like is allowable). The shaft part 52 does not project from the penetration hole 30h here. In another embodiment, however, the shaft part 52 may project from the penetration hole 30h.

The positive electrode current collecting member 50 is joined to the positive electrode terminal 30. In this embodiment, as illustrated in FIG. 3, a periphery of the penetration hole 30h of the positive electrode terminal 30 and the shaft part 52 of the positive electrode current collecting member 50 inserted into the penetration hole 30h (in particular, a tip end part on the outside of the case main body 12) are joined together. The positive electrode terminal 30 and the positive electrode current collecting member 50 are joined together outside the case main body 12 (on the outer surface side of the bottom wall 12a). By joining the positive electrode terminal 30 and the positive electrode current collecting member 50 outside the case main body 12, the positive electrode terminal 30 and the positive electrode current collecting member 50 can be joined together more stably.

A joining part J is formed on the outside of the case main body 12. The joining part J is preferably a welding joining part formed by irradiation with an energy beam in laser welding or the like, for example. The joining part J protrudes out of the penetration hole 30h here. As illustrated in FIG. 1, the joining part J has a ring shape (for example, annular shape) here. The joining part J is provided continuously along the entire circumference at a border part between the periphery of the penetration hole 30h of the positive electrode terminal 30 and the shaft part 52 of the positive electrode current collecting member 50. Thus, the electric connection between the positive electrode terminal 30 and the positive electrode current collecting member 50 can be easily kept more stably and the conduction reliability of the joining part J can be improved.

The negative electrode current collecting member 60 is a conductive member and forms a conductive path between the negative electrode 24 (specifically, the negative electrode tab group 28) and the negative electrode terminal 40. The negative electrode current collecting member 60 is preferably formed of metal with excellent conductivity and is formed of, for example, copper or a copper alloy. The negative electrode current collecting member 60 may be formed of the metal similar to that of the negative electrode tab 24t and/or the negative electrode terminal 40. The negative electrode current collecting member 60 has a structure similar to that of the positive electrode current collecting member 50 here. The negative electrode current collecting member 60 includes a flange part 61 and the shaft part 62 as illustrated in FIG. 2. In the case where the negative electrode 24 is "the first electrode", the negative electrode current collecting member 60 is one example of "the first current collecting member".

The spacer 80 is disposed between the bottom wall 12a (specifically, on an inner side surface, an upper surface in FIG. 2) and the electrode body 20 (specifically, a lower side surface in FIG. 2) inside the case 10 as illustrated in FIG. 2. Note that the spacer 80, which is a main part, is illustrated a little larger than the actual spacer in FIG. 2, etc. The spacer 80 typically has an insulating property, and is preferably made of resin. The material of the spacer 80 may be the same as the materials given as the examples of the electrode body holder 29. The spacer 80 is one member here. However, the spacer 80 may be formed by a plurality of members, which will also be described in a modification (2-2) below. The plurality of members may be integrated by assembling or disposed at separate positions. In one example, a first spacer and a second spacer can be disposed on the positive electrode terminal 30 side and on the negative electrode terminal 40 side, respectively.

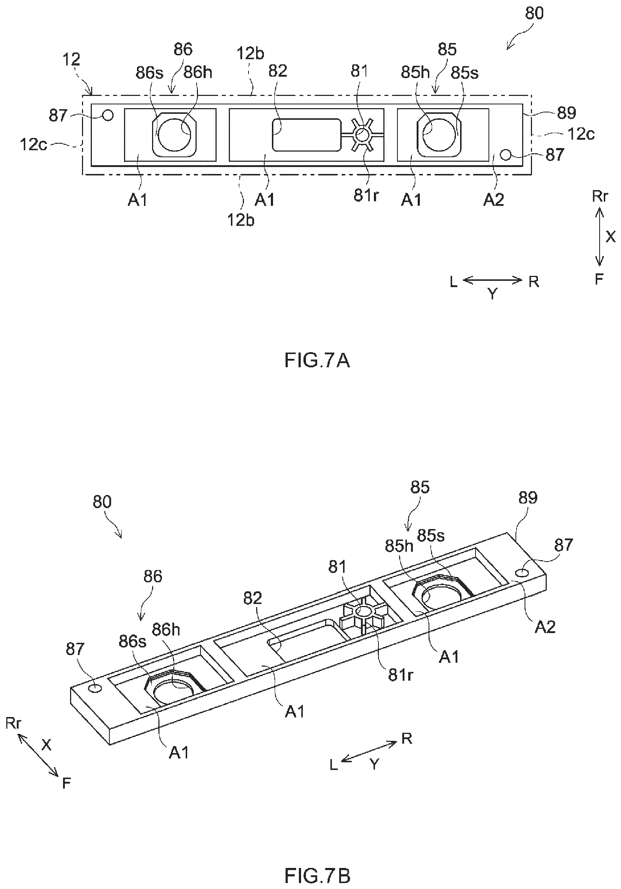

FIG. 7A is a plan view schematically illustrating the spacer 80, and FIG. 7B is a perspective view schematically illustrating the spacer. Note that, in FIG. 7A, the side walls of the case main body 12 (the pair of long side walls 12b and the pair of short side walls 12c) are illustrated together with virtual lines. FIG. 7B illustrates the surface on the electrode body 20 side. As illustrated in FIG. 6, FIG. 7A, and FIG. 7B, the spacer 80 includes a base part 89, a liquid injection penetration hole 81, a gas discharge penetration hole 82, a positive electrode side support part 85, and a negative electrode side support part 86 here.

As illustrated in FIG. 2, the base part 89 extends along the bottom wall 12a of the case main body 12. As illustrated in FIG. 7A, in the XY plan view, an outer periphery of the spacer 80 (specifically, the base part 89) is preferably in contact with or close to the inner surface of the side wall of the case main body 12. The gap between the spacer 80 and the side wall of the case main body 12 (the difference between the inner size of the case main body 12 and the outer size of the spacer 80) is preferably 1 mm or less, more preferably 0.8 mm or less, and still more preferably 0.5 mm or less. Thus, the high effect of the spacer 80 as the positioning member to be described below is achieved easily.

As can be seen from FIG. 7B, the base part 89 includes thin regions A1 with relatively small thickness and a thick region A2 with relatively large thickness. The thin regions A1 are provided in a peripheral part of the liquid injection penetration hole 81 and the gas discharge penetration hole 82, a peripheral part of the positive electrode side support part 85, and a peripheral part of the negative electrode side support part 86 here. The thick region A2 is provided at an outer edge part of the base part 89, in a vicinity of the pair of short side walls 12c, between the liquid injection penetration hole 81 and the positive electrode side support part 85, and between the gas discharge penetration hole 82 and the negative electrode side support part 86 here. The thickness of the thick region A2 is preferably twice or more, and more preferably three times or more the thickness of the thin region A1.

As indicated by dashed lines in FIG. 3, the thick region A2 is preferably in contact with or close to the end part of the electrode body 20 (or the electrode body holder 29) on one side. Thus, the load can be diffused in (step 4) the inserting step or (step 5) a joining step in the manufacturing method to be described below. In addition, it becomes difficult for the electrode body 20 to move inside the case 10. On the other hand, in the peripheral part of the positive electrode side support part 85 and the peripheral part of the negative electrode side support part 86, it is preferable to secure a gap S between the thin region A1 and the electrode body 20 (or the electrode body holder 29).

When the base part 89 includes the thick region A2 and the gap S is secured in the peripheral part of the positive electrode side support part 85 and the peripheral part of the negative electrode side support part 86, the electrode body 20 can be supported by the bottom wall 12a through the thick region A2 even if the bottom wall 12a of the case main body 12 is in the posture of being disposed on the lower side in the vertical direction at the manufacture or the use of the electrical energy storage device 100. Therefore, it is possible to suitably suppress the damage in the conductive path, for example the positive electrode tab group 27 and/or the negative electrode tab group 28, the joining part between the positive electrode tab group 27 and the positive electrode current collecting member 50 and/or the joining part between the negative electrode tab group 28 and the negative electrode current collecting member 60, or the like due to the weight of the electrode body 20. However, the thick region A2 is not essential and the base part 89 may have a flat plate shape with substantially uniform thickness.

The liquid injection penetration hole 81 is a penetration hole penetrating the thin region A1 of the base part 89 in the up-down direction Z. As illustrated in FIG. 2, the liquid injection penetration hole 81 is provided in a part facing the electrolyte solution injection hole 15 (overlapping part in the XY plan view). Thus, in the up-down direction Z, the electrolyte solution injection hole 15 directly faces the electrode body 20 (or the electrode body holder 29). As illustrated in FIG. 7B, a reinforcement rib 81r is provided around the liquid injection penetration hole 81. Thus, even if a load is applied to the periphery of the electrolyte solution injection hole 15 at the liquid injection, for example, the deformation of the bottom wall 12a can be suppressed. The reinforcement rib 81r is provided at the periphery of the liquid injection penetration hole 81 and radially with the liquid injection penetration hole 81 as a center here. The reinforcement rib 81r is coupled to the thick region A2. However, the liquid injection penetration hole 81 is not essential and can be omitted when, for example, the case main body 12 does not include the electrolyte solution injection hole 15 or the electrolyte solution injection hole 15 is provided on the sealing plate 14 side.

The gas discharge penetration hole 82 is a penetration hole penetrating the thin region A1 of the base part 89 in the up-down direction Z. As illustrated in FIG. 2, the gas discharge penetration hole 82 is provided at a part facing the gas discharge valve 17 (overlapping part in the XY plan view). Thus, in the up-down direction Z, the gas discharge valve 17 directly faces the electrode body 20 (or the electrode body holder 29). Such a structure makes it easier to open the gas discharge valve 17 stably when the pressure in the case 10 becomes a predetermined value or more. The gas discharge penetration hole 82 is set as a hole formed by pressing and cutting here. However, the gas discharge penetration hole 82 is not essential and can be omitted when the gas discharge valve 17 is provided on the sealing plate 14 side, for example.

The positive electrode side support part 85 is provided on a surface of the base part 89 on the electrode body 20 side. The positive electrode side support part 85 is provided in the thin region A1. The positive electrode side support part 85 is a part that supports the conductive path on the positive electrode 22 side. As illustrated in FIG. 7A and FIG. 7B, the positive electrode side support part 85 includes the step part 85s (concave part) and the penetration hole 85h.

The step part 85s is provided at an outer periphery of the penetration hole 85h. As can be seen from FIG. 3, the positive electrode current collecting member 50 is disposed in the step part 85s. The step part 85s has the same shape as the flange part 51 in the XY plan view here. The flange part 51 of the positive electrode current collecting member 50 is engaged with the step part 85s. Thus, it is possible to suppress that the positive electrode current collecting member 50 is displaced from a desired position in (step 4) the inserting step in the manufacturing method to be descried below. In addition, the positive electrode current collecting member 50 can be kept in a desired posture; thus, the positive electrode current collecting member 50 can be inserted to the penetration hole 30h stably.

The penetration hole 85h is provided inside the step part 85s. To the penetration hole 85h, the positive electrode current collecting member 50 (specifically, the shaft part 52 with the columnar shape) is inserted. The penetration hole 85h has its outer periphery closed here. However, the outer periphery of the penetration hole 85h is not necessarily closed and an opening part may be formed as will also be described in a modification (2-1) below, for example. As illustrated in FIG. 3, the engagement convex part 85c is provided at an inner wall surface of the penetration hole 85h. The engagement convex part 85c of the penetration hole 85h is engaged with the engagement concave part 51r of the positive electrode current collecting member 50. Note that, in this embodiment, the engagement convex part 85c is provided in the spacer 80 and the engagement concave part 51r is provided in the positive electrode current collecting member 50; however, on the contrary, the engagement concave part may be provided on the spacer 80 side and the engagement convex part may be provided on the positive electrode current collecting member 50 side in another embodiment.

The negative electrode side support part 86 is provided on the surface of the base part 89 on the electrode body 20 side. The negative electrode side support part 86 is provided in the thin region A1. The negative electrode side support part 86 is a part that supports the conductive path on the negative electrode 24 side. The negative electrode side support part 86 has a structure similar to that of the positive electrode side support part 85. The negative electrode side support part 86 is provided symmetrically with respect to the positive electrode side support part 85 in the left-right direction. As illustrated in FIG. 7A and FIG. 7B, the negative electrode side support part 86 includes a step part 86s (concave part) and a penetration hole 86h.

The step part 86s is provided at an outer periphery of the penetration hole 86h. As can be seen from FIG. 2, the negative electrode current collecting member 60 is disposed in the step part 86s. The flange part 61 of the negative electrode current collecting member 60 is engaged with the step part 86s here. The penetration hole 86h is provided inside the step part 86s. To the penetration hole 86h, the negative electrode current collecting member 60 (specifically, the shaft part 62 with the columnar shape) is inserted. Although the illustration is omitted, the engagement convex part is provided also at an inner wall surface of the penetration hole 86h similarly to the penetration hole 85h on the positive electrode side. The engagement convex part of the penetration hole 86h is engaged with the engagement concave part of the negative electrode current collecting member 60.

**In** this embodiment, the spacer 80 is integrated with (specifically, mechanically connected to) the current collecting member (the positive electrode current collecting member 50 and/or the negative electrode current collecting member 60) by structures including the following (a) to (c):
(a) the spacer 80 includes the penetration holes 85h and 86h, the shaft part 52 with the columnar shape of the positive electrode current collecting member 50 (a part of the first current collecting member) is inserted to the penetration hole 85h, and the shaft part 62 with the columnar shape of the negative electrode current collecting member 60 (a part of the first current collecting member) is inserted to the penetration hole 86h;
(b) the spacer 80 includes the step parts 85s and 86s (concave parts), the flange part 51 of the positive electrode current collecting member 50 (a part of the first current collecting member) is engaged with the step part 85s, and the flange part 61 of the negative electrode current collecting member 60 (a part of the first current collecting member) is engaged with the step part 86s; and
(c) the spacer 80 includes the penetration holes 85h and 86h, the engagement convex part 85c is provided at an inner side wall of each of the penetration holes 85h and 86h, the engagement concave part 51r is provided in the positive electrode current collecting member 50, the engagement concave part is provided in the negative electrode current collecting member 60, and the engagement concave part 51r and the engagement convex part 85c are engaged with each other. In other words, the spacer 80 is assembled to the current collecting member. The spacer 80 is also integrated with (connected to) the electrode body 20 through the current collecting member.

The spacer 80 and the current collecting member (the positive electrode current collecting member 50 and/or the negative electrode current collecting member 60) are integrated, so that the current collecting member and the electrode body 20 can be guided to the desired positions in (step 4) the inserting step in the manufacturing method to be described below. That is to say, the spacer 80 can function as the positioning member for the current collecting member and the electrode body 20. Additionally, in (step 5) the joining step in the manufacturing method to be descried below, the current collecting member is brought into contact with the terminal (the positive electrode terminal 30 and/or the negative electrode terminal 40) stably to facilitate the joining.

Note that, in this embodiment, the spacer 80 and the current collecting member are integrated by the structures (a) to (c) described above; however, the method of integrating the spacer 80 and the current collecting member is not limited to the aforementioned method. For example, a claw part for fixing may be provided at an upper surface or a lower surface of the spacer 80, so that the current collecting member may be fixed in such a way that this claw part catches a part of the current collecting member (for example, the flange part 51 or 61). Alternatively, the spacer 80 and the electrode body 20 (or the electrode body holder 29) may be fixed with a tape or the like, so that the spacer 80 and the electrode body 20 are integrated not through the current collecting member. In addition, all the structures (a) to (c) described above are not necessarily included, and it is only necessary that at least one structure (preferably more than one structure, and more preferably all structures) is included. In some aspects, it is preferable that when the spacer 80 is pressed toward the bottom wall 12a through the electrode body 20, the spacer 80 and the current collecting member be connected to each other so that the spacer 80 easily presses the current collecting member against the terminal. For example, the aspect disclosed in FIG. 3, fixing by catching with the claw part, or an aspect in a first modification to be described below is preferable.

Moreover, the spacer 80 according this embodiment further includes the hole part 87 as illustrated in FIG. 6, FIG. 7A, and FIG. 7B. As illustrated in FIG. 4, the hole part 87 is provided at a surface of the base part 89 on the bottom wall 12a side. The hole part 87 is provided at a position corresponding to the protrusion part 12p provided at the inner surface of the bottom wall 12a. The hole part 87 is a penetration hole penetrating the thick region A2 of the base part 89 in the up-down direction Z here. To the hole part 87, the protrusion part 12p is inserted. Thus, the spacer 80 is positioned with respect to the bottom wall 12a of the case main body 12. Accordingly, the current collecting member (the positive electrode current collecting member 50 and/or the negative electrode current collecting member 60) integrated with the spacer 80 is positioned. The hole part 87 preferably has its diameter gradually increasing toward the bottom wall 12a from the viewpoint of increasing the insertion property of the protrusion part 12p.

Note that, in this specification, the term "hole part" encompasses, in addition to the penetration hole (a part that goes through to the other side) as described in this embodiment, a depression part (concave part) provided at an inner surface of the base part 89 on the bottom wall 12a side as long as at least a part of the protrusion part 12p can be accommodated. While the protrusion part 12p (convex part) is provided at the bottom wall 12a and the hole part 87 is provided at the spacer 80 in this embodiment, on the contrary, the protrusion part may be provided on the spacer 80 side and the hole part may be provided on the bottom wall 12a side in another embodiment.

### [Manufacturing method for electrical energy storage device]

The electrical energy storage device 100 according to this embodiment can be manufactured by a method including the following steps: (step 1A) a case preparing step; (step 1B) an electrode body preparing step; (step 2) a connecting step; (step 3) an assembling step; (step 4) the inserting step; (step 5) the joining step; and (step 6) a sealing step, for example. However, the order of (step 1A) the case preparing step and (step 1B) the electrode body preparing step is not limited in particular and may be opposite or may be substantially the same time. In addition, the order of (step 1A) the case preparing step and (step 2) the connecting step is not limited in particular and may be opposite or may be substantially the same time. Furthermore, the order of (step 2) the connecting step and (step 3) the assembling step is not limited in particular and may be opposite or may be substantially the same time. The manufacturing method disclosed herein may further include another step at an optional stage. For example, (step 6) the sealing step may be followed by a step of injecting the electrolyte solution into the case 10.

In (step 1A) the case preparing step, the case main body 12 and the sealing plate 14 are prepared before the inserting step. Specifically, the case main body 12 with the bottomed tubular shape including the bottom wall 12a, the side walls 12b and 12c, and the opening 12h, and the sealing plate 14 that seals the opening 12h are prepared. The case main body 12 and the sealing plate 14 may be a purchased product supplied from a supplier or the like or can be manufactured by yourself. In some embodiments, the case main body 12 may have the terminal (the positive electrode terminal 30 and/or the negative electrode terminal 40) attached to the bottom wall 12a in advance. The terminal is preferably attached to the bottom wall 12a in a state of being insulated from the bottom wall 12a through an insulating member (for example, the gasket 90 and the external insulating member 92).

The terminal may be attached by any method without particular limitations. The terminal may be attached in advance to the bottom wall 12a together with the gasket 90 and the external insulating member 92 by the method of insert molding (integral molding), for example. That is to say, the case main body 12 may be prepared as an integrally molded product that is integrated with the gasket 90, the external insulating member 92, and the terminal (the positive electrode terminal 30 and/or the negative electrode terminal 40). Alternatively, the terminal may be attached to the bottom wall 12a together with the gasket 90 and the external insulating member 92 by the caulking process (riveting) or the like, or may be attached to the bottom wall 12a through the adhesive layer (adhesive or the like), for example. In addition, the terminal does not need to be attached to the bottom wall 12a first and can be attached to the bottom wall 12a in the inserting step, the joining step, or the like to be described below, for example.

In (step 1B) the electrode body preparing step, the electrode body 20 is prepared. The electrode body 20 may be a purchased product supplied from the supplier or the like or can be manufactured by yourself. In one example, first, the positive electrode 22 with a band shape and the negative electrode 24 with a band shape are stacked on each other through the separator 26 with a band shape, and wound in the longitudinal direction LD using the winding axis WL as a center so as to be formed in a tubular shape. At this time, adjustment is conducted so that the plurality of positive electrode tabs 22t and the plurality of negative electrode tabs 24t project from the same end side and are stacked at different positions. Next, the electrode body (tubular body) wound into the tubular shape is subjected to press-molding into a flat shape, for example, so that the electrode body 20 with the flat shape is manufactured. Then, the plurality of positive electrode tabs 22t are bundled, thereby being integrated as the positive electrode tab group 27. Similarly, the plurality of negative electrode tabs 24t are bundled, thereby being integrated as the negative electrode tab group 28.

In (step 2) the connecting step, the first current collecting member (the positive electrode current collecting member 50 or the negative electrode current collecting member 60) is electrically connected to the first electrode (the positive electrode 22 or the negative electrode 24) of the electrode body 20. That is to say, the conductive path between the first electrode and the first current collecting member is formed. In this embodiment, the flange part 51 of the positive electrode current collecting member 50 is joined to the positive electrode tab group 27 of the positive electrode 22, so that the positive electrode current collecting member 50 is electrically connected to the positive electrode 22. Similarly, the flange part 61 of the negative electrode current collecting member 60 is joined to the negative electrode tab group 28 of the electrode body 20, so that the negative electrode current collecting member 60 is electrically connected to the negative electrode 24. The joining method may be similar to the conventional method without particular limitations. In some embodiments, for example, it is preferable to employ welding joining by irradiation with an energy beam, such as ultrasonic welding, resistance welding, or laser welding. Thus, the electrode body 20 is integrated with (mechanically connected to) the current collecting member. Then, the electrode body 20 is covered with the electrode body holder 29 (resin sheet or the like).

Note that, in the case where the two electrode bodies 20 are accommodated inside one case 10 as described in this embodiment, the positive electrode tab group 27 of the first electrode body 20 and the positive electrode tab group 27 of the second electrode body 20 may be joined to one positive electrode current collecting member 50 and the negative electrode tab group 28 of the first electrode body 20 and the negative electrode tab group 28 of the second electrode body 20 may be joined to one negative electrode current collecting member 60. Thus, the two electrode bodies 20 can be aggregated as one complex body.

In (step 3) the assembling step, the spacer 80 is disposed at an end part, on one side, of the electrode body 20 where the first current collecting member (the positive electrode current collecting member 50 or the negative electrode current collecting member 60) is attached (at an end part on the side where the first current collecting member is provided) before the inserting step (before the electrode body 20 is inserted to the case main body 12). Then, the first current collecting member is assembled to the spacer 80, so that the first current collecting member is integrated with the spacer 80. This makes it easier to guide the first current collecting member and the electrode body 20 to the desired positions in the inserting step to be described below. That is to say, the spacer 80 can function as the positioning member for the first current collecting member and the electrode body 20. **In** the joining step to be described below, moreover, the first current collecting member can be stably brought into contact with the first electrode terminal (the positive electrode terminal 30 or the negative electrode terminal 40) for stable joining.

As described above, the spacer 80 according to this embodiment includes the penetration holes 85h and 86h (see FIG. 7A). Therefore, for example, putting the spacer 80 from above the first current collecting member inserts a part (for example, the shaft part 52 or 62 with the columnar shape) of the first current collecting member (the positive electrode current collecting member 50 or the negative electrode current collecting member 60) to the penetration hole 85h or 86h. Thus, the first current collecting member and the spacer 80 are integrated. The shaft part 52 or 62 with the columnar shape of the first current collecting member projects from the penetration hole 85h or 86h of the spacer 80. Such a structure makes it possible to position the first current collecting member more effectively in the inserting step to be described below. In the joining step, moreover, the first current collecting member and the first electrode terminal can be brought into contact with each other more stably to facilitate the joining.

Moreover, the spacer 80 according to this embodiment includes the step parts 85s and 86s (concave parts, see FIG. 7A). Therefore, when the spacer 80 is disposed at the end part of the electrode body 20 on one side, a part (for example, the flange part 51 or 61) of the first current collecting member (the positive electrode current collecting member 50 or the negative electrode current collecting member 60) is engaged with the step part 85s or 86s. A surface of the first current collecting member on the electrode body 20 side is supported by the step part 85s or 86s (support part) of the spacer 80. Here, moreover, the first electrode tab group (the positive electrode tab group 27 or the negative electrode tab group 28) is inserted to the penetration hole 85h or 86h of the spacer 80. In addition, the thick region A2 of the spacer 80 is supported by the end part of the electrode body 20 on one side. Thus, the first current collecting member and the spacer 80 are integrated. Such a structure makes it possible to position the first current collecting member more effectively in the inserting step to be described below. In the joining step, moreover, the first current collecting member and the first electrode terminal can be brought into contact with each other more stably to facilitate the joining.

In addition, the spacer 80 according to this embodiment includes the penetration holes 85h and 86h (see FIG. 7A), and the engagement convex part 85c (see FIG. 3) is provided at the inner wall surface of each of the penetration holes 85h and 86h. Moreover, the engagement concave part 51r is provided at the position facing the engagement convex part 85c in the first current collecting member (the positive electrode current collecting member 50 or the negative electrode current collecting member 60). Therefore, when the spacer 80 is disposed at the end part of the electrode body 20 on one side, the engagement convex part 85c is engaged with the engagement concave part 51r of the first current collecting member. Thus, the current collecting member is fixed firmly to the spacer 80 and the integrity between the spacer 80 and the current collecting member is increased.

In this manner, the first current collecting member and the spacer 80 are integrated with each other in this step and a united object including the electrode body 20, the first current collecting member, and the spacer 80 is manufactured as illustrated in FIG. 7. Note that, in this embodiment, the first current collecting member is electrically connected to the first electrode of the electrode body 20 first in (step 2) the connecting step and the spacer 80 is integrated with the first current collecting member in (step 3) the assembling step; however, the order of these steps is not limited in particular as described above. For example, the spacer 80 may be attached to the first current collecting member first, and then the first current collecting member may be electrically connected to the first electrode of the electrode body 20, which is contrary to this embodiment.

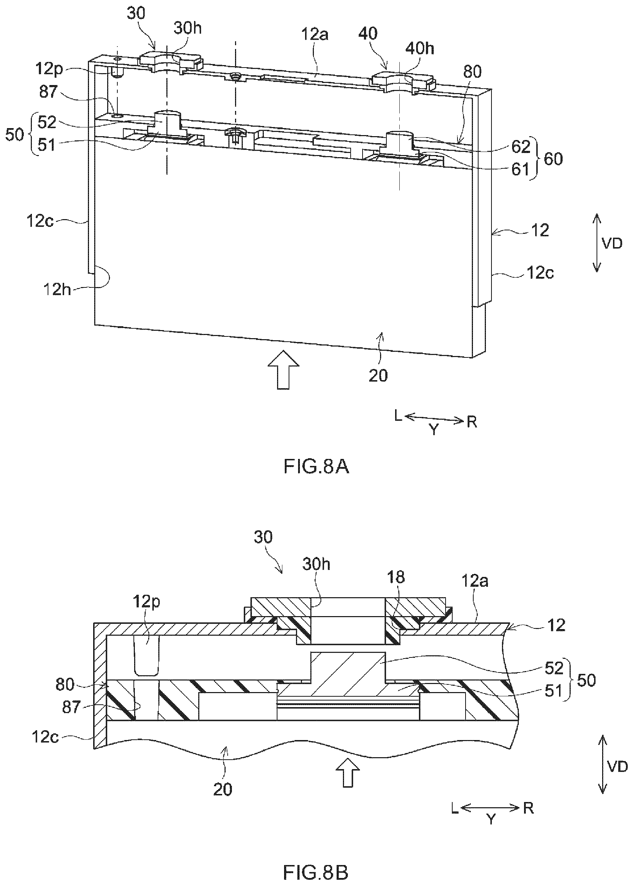

In (step 4) the inserting step, after the case preparing step and the assembling step, the electrode body 20 integrated with the spacer 80 is inserted into the case main body 12 from the end part of the electrode body 20 on one side (the spacer 80 side). Specifically, the electrode body 20 is inserted through the opening 12h of the case main body 12 so that the side of the electrode body 20 where the current collecting member (the positive electrode current collecting member 50 and/or the negative electrode current collecting member 60) is attached faces the bottom wall 12a. FIG. 8A is an explanatory view of the inserting step, and FIG. 8B is a partial enlarged view of the vicinity of the positive electrode terminal 30, which is a main part. Note that FIG. 8A and FIG. 8B illustrate an inversion posture in which the bottom wall 12a of the case main body 12 faces upward in the vertical direction in consideration of the workability or the like in the joining step to be described below. FIG. 8B also expresses the cross section passing the extraction hole 18 and the protrusion part 12p of the bottom wall 12a.

As described above, the spacer 80 according to this embodiment is configured so that its outer periphery is in contact with or close to the inner surface of the side walls of the case main body 12 (the pair of long side walls 12b and the pair of short side walls 12c). Therefore, the spacer 80 inserted into the case main body 12 moves toward the bottom wall 12a along the side walls 12b and 12c of the case main body 12 as illustrated in FIG. 8A. Thus, the electrode body 20 can be kept horizontal easily and it is possible to suppress that the electrode body 20 is accommodated in the tilted state in the case main body 12 or gets caught by the side wall in the middle of moving, for example. That is to say, the spacer 80 according to this embodiment makes it easier to guide the electrode body 20 to a desired arrangement position.

In this embodiment, the current collecting member (the positive electrode current collecting member 50 and/or the negative electrode current collecting member 60) is integrated with the spacer 80; therefore, as the spacer 80 moves toward the bottom wall 12a along the side walls 12b and 12c of the case main body 12, the current collecting member also moves toward the bottom wall 12a. As can be seen from FIG. 8A and FIG. 8B, at least a part of the current collecting member is inserted to the penetration hole 30h or 40h of the terminal (the positive electrode terminal 30 and /or the negative electrode terminal 40). Specifically, the shaft part 52 with the columnar shape of the positive electrode current collecting member 50 is inserted to the penetration hole 30h of the positive electrode terminal 30 and the shaft part 62 with the columnar shape of the negative electrode current collecting member 60 is inserted to the penetration hole 40h of the negative electrode terminal 40. Thus, the current collecting member can be stably inserted into the penetration hole of the terminal provided at the bottom wall 12a. That is to say, the spacer 80 according to this embodiment can function as a positioning member that guides the current collecting member to a desired joining position.

In addition, as illustrated in FIG. 8B, the protrusion part 12p (convex part) is provided at the inner surface side of the bottom wall 12a and the hole part 87 is provided at the spacer 80 in this embodiment. Therefore, bringing the spacer 80 closer to the bottom wall 12a as indicated by an arrow in FIG. 8B inserts the protrusion part 12p of the bottom wall 12a to the hole part 87 of the spacer 80. Thus, the spacer 80 can be positioned with respect to the case main body 12 (specifically, the bottom wall 12a). In particular, in this embodiment, the length of the protrusion part 12p in the up-down direction Z is longer than the length of the shaft part 52 in the up-down direction Z; thus, the protrusion part 12p of the bottom wall 12a is inserted to the hole part 87 of the spacer 80 before at least a part of the current collecting member is inserted to the penetration hole 30h or 40h of the terminal. Therefore, the position tolerance can be absorbed and the spacer 80 can be positioned with respect to the case main body 12 more effectively. That is to say, it becomes easy to position the current collecting member integrated with the spacer 80 with high accuracy with respect to the penetration hole 30h or 40h provided at the bottom wall 12a.

In this embodiment, as illustrated in FIG. 8A, this step is performed in such a way that the bottom wall 12a of the case main body 12 is in the inversion posture of facing upward in the vertical direction. In the case where the weight of the electrode body 20 is large, for example, this step may be performed in such a way that the side walls (the pair of long side walls 12b or the pair of short side walls 12c) are in a posture of existing up and down in the vertical direction and the short sides or the long sides of the bottom wall 12a extend in the vertical direction.

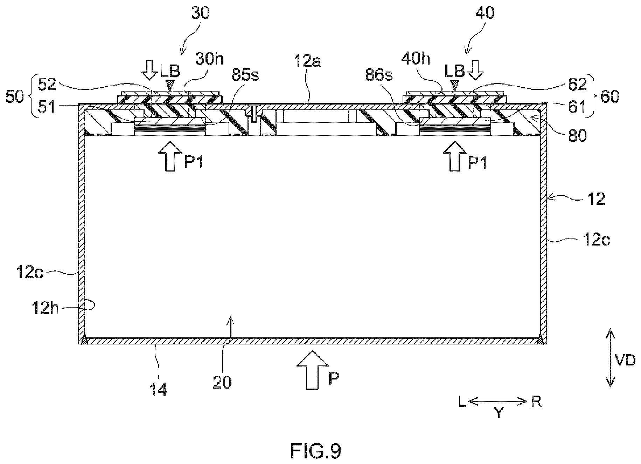

In (step 5) the joining step, after the inserting step, the first current collecting member (the positive electrode current collecting member 50 or the negative electrode current collecting member 60) and the first electrode terminal (the positive electrode terminal 30 or the negative electrode terminal 40) are joined. FIG. 9 is an explanatory view of the joining step. Note that, in FIG. 9, the bottom wall 12a is in the inversion posture of facing upward in the vertical direction, similarly to FIG. 8A.

In this embodiment, the engagement concave part 51r of the positive electrode current collecting member 50 and the engagement convex part 85c of the spacer 80 are engaged with each other as illustrated in FIG. 3 before the joining step. Therefore, when the electrode body 20 is pressurized from the opening 12h side to the bottom wall 12a side so as to apply a load P as indicated by an arrow in FIG. 9 while the bottom wall 12a remains in the inversion posture of facing upward in the vertical direction, a load P1 is applied to the spacer 80 through parts in contact with the electrode body 20 (thick region A2, places indicated by dashed lines in FIG. 9). Thus, the first current collecting member is pressed against the first electrode terminal through the spacer 80. Accordingly, the first current collecting member can be suitably pressed against the first electrode terminal. Specifically, the state in which the shaft parts 52 and 62 of the first current collecting members are inserted to the penetration holes 30h and 40h of the first electrode terminals can be suitably maintained. Preferably, the state in which the peripheries of the penetration holes 30h and 40h of the first electrode terminals and end surfaces of the shaft parts 52 and 62 of the first current collecting members are substantially flush with each other can be maintained.

Note that the pressurization may be performed by applying the load directly to an end surface of the electrode body 20 on the lower side in the vertical direction (an end surface on the side opposite to the side where the first current collecting member is provided), or the pressurization may be performed through another member (for example, the electrode body holder 29, another spacer, a jig, the sealing plate 14, or the like). In this embodiment, the electrode body 20 is pressed through the sealing plate 14. This makes it easier to press the electrode body 20 homogeneously.

Then, a place where the first current collecting member and the first electrode terminal are in contact with each other is joined while the first current collecting member (the positive electrode current collecting member 50 or the negative electrode current collecting member 60) is pressed against the first electrode terminal (the positive electrode terminal 30 or the negative electrode terminal 40). At this time, it is more preferable to press the first electrode terminal toward the bottom wall 12a of the case main body 12 with a jig or the like as indicated by the arrow in FIG. 9. In this embodiment, the parts of the first current collecting members that are inserted to the penetration holes 30h and 40h (tip end parts of the shaft parts 52 and 62) are joined to the first electrode terminals. This brings the first current collecting member and the first electrode terminal into contact with each other as appropriate to join the first current collecting member and the first electrode terminal more stably.

The joining method is not limited in particular. In some embodiments, it is preferable to perform welding joining by delivering an energy beam such as laser LB from outside the case main body 12 (the outer surface side of the bottom wall 12a) as illustrated in FIG. 9. Joining from outside the case main body 12 makes it possible to see the joining part with eyes; therefore, the current collecting member and the terminal can be joined more stably. In this embodiment, the joining part J with a ring shape (for example, annular shape) is formed along each of the penetration holes 30h and 40h.

In (step 6) the sealing step, the sealing plate 14 is engaged with the opening 12h of the case main body 12, so that the periphery of the opening 12h of the case main body 12 and the sealing plate 14 are joined. Thus, the joining part 10w is formed to seal the case 10. The joining method may be similar to the conventional method without particular limitations. In some embodiments, it is preferable to perform welding joining by delivering an energy beam such as laser to the engagement prat between the case main body 12 and the sealing plate 14 along the periphery of the opening 12h. In this manner, the electrical energy storage device 100 can be manufactured.

### [Application of electrical energy storage device]

The electrical energy storage device 100 can be used for various purposes, but can be suitably used in an application in which the load can be applied to the terminal (the positive electrode terminal 30 and/or the negative electrode terminal 40) during the use, for example, as a power source (driving power source) for a motor mounted on a moving body (typically, a vehicle such as a passenger car or a truck). The vehicle is not limited to a particular type, and may be, for example, a plug-in hybrid electric vehicle (PHEV), a hybrid electric vehicle (HEV), or a battery electric vehicle (BEV).

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

### (1) Current collector and electrode tab:

(1-1) For example, in the aforementioned embodiment, the positive electrode current collector 22c of the positive electrode 22 is a metal foil, specifically, an aluminum foil. In addition, the negative electrode current collector 24c of the negative electrode 24 is a metal foil, specifically, a copper foil. However, the present disclosure is not limited to these examples. In a modification, the current collector (the positive electrode current collector 22c and/or the negative electrode current collector 24c, preferably both) preferably has a structure including a core body with an insulating property (for example, resin layer) and a pair of metal layers formed on a pair of surfaces (both surfaces) of the core body. The total thickness of the current collector is preferably 20 µm or less and more preferably 10 µm or less, although there is no particular limitation.

The core body is preferably formed of resin such as polyethylene terephthalate (PET), nylon, polypropylene (PP), or polyethylene (PE). When the total thickness of the current collector is 100%, the thickness of the core body is preferably 50% or more. Thus, the weight of the electrode body 20 can be reduced and when, for example, the electrode tab (the positive electrode tab 22t and/or the negative electrode tab 24t) is disposed in a posture of being disposed below in the vertical direction during the use of the electrical energy storage device 100, the damage of the electrode tab and the electrode body 20 can be suppressed effectively. In addition, as the metal layer, it is preferable to use aluminum, an aluminum alloy, copper, a copper alloy, nickel, a nickel alloy, iron, an iron alloy, or the like.

(1-2) In the embodiment described above, for example, the electrode tab (the positive electrode tab 22t and/or the negative electrode tab 24t) is the region of the current collector (the positive electrode current collector 22c and/or the negative electrode current collector 24c) where the active material layer (the positive electrode active material layer 22a and/or the negative electrode active material layer 24a) is not formed. However, the present disclosure is not limited to this example. The electrode tab may be a member separated from the current collector. For example, in the case where the current collector has the structure of including the core body and the pair of metal layers as described above, a conductive member including a metal plate or a metal foil thicker than the metal layer may be attached to the metal layer part and the conductive member may be connected to the current collecting member (the positive electrode current collecting member 50 and/or the negative electrode current collecting member 60) as the electrode tab.

### (2) Spacer:

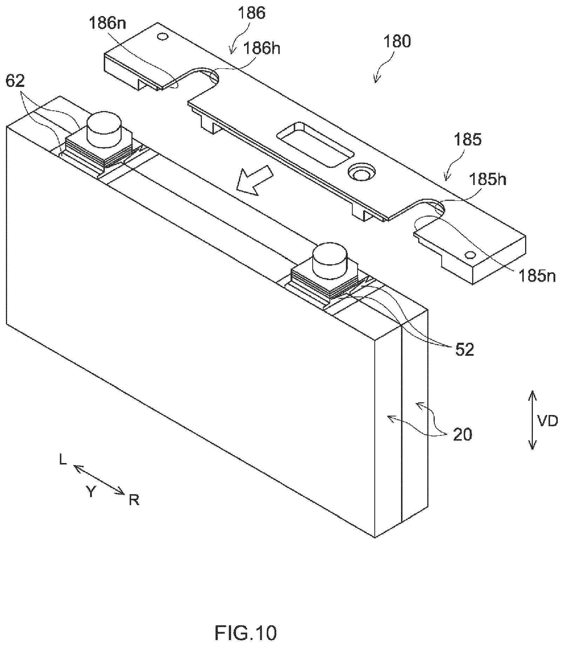

(2-1) FIG. 10 is an explanatory view of an assembling step according to the first modification. A spacer 180 illustrated in FIG. 10 includes a positive electrode side support part 185 and a negative electrode side support part 186. The positive electrode side support part 185 includes a penetration hole 185h, and an opening part 185n is provided on one side of the penetration hole 185h in the short side direction X. The negative electrode side support part 186 includes a penetration hole 186h, and an opening part 186n is provided on one side of the penetration hole 186h in the short side direction X. The opening part 185n or 186n is larger than the shaft part 52 or 62 with the columnar shape of the first current collecting member (the positive electrode current collecting member 50 or the negative electrode current collecting member 60). In this case, in (step 3) the assembling step, sliding (inserting) the spacer 80 from a side of the first current collecting member as indicated by an arrow in FIG. 10 inserts the first current collecting members to the penetration holes 85h and 86h through the opening parts 185n and 186n and thus, the spacer 180 can be assembled to the first current collecting members.

In some aspects, it is preferable that the positive electrode side support part 185 be disposed between the positive electrode current collecting member 50 and the electrode body 20 as described in this modification. Thus, the positive electrode side support part 185 supports a surface of the positive electrode current collecting member 50 on the electrode body 20 side. In addition, it is preferable that the negative electrode side support part 186 be disposed between the negative electrode current collecting member 60 and the electrode body 20. Thus, the negative electrode side support part 186 supports a surface of the negative electrode current collecting member 60 on the electrode body 20 side. When the positive electrode 22 is "the first electrode", the positive electrode side support part 185 is one example of "a support part that supports the surface of the first current collecting member on the electrode body side". When the negative electrode 24 is "the first electrode", the negative electrode side support part 186 is one example of "a support part that supports the surface of the first current collecting member on the electrode body side".

Note that, in this modification, it is preferable to join the positive electrode current collecting member 50 to the positive electrode terminal 30 while the positive electrode side support part 185 presses the surface of the positive electrode current collecting member 50 on the electrode body 20 side toward the positive electrode terminal 30 in (step 5) the joining step. In addition, it is preferable to join the negative electrode current collecting member 60 to the negative electrode terminal 40 while the negative electrode side support part 186 presses the surface of the negative electrode current collecting member 60 on the electrode body 20 side toward the negative electrode terminal 40.

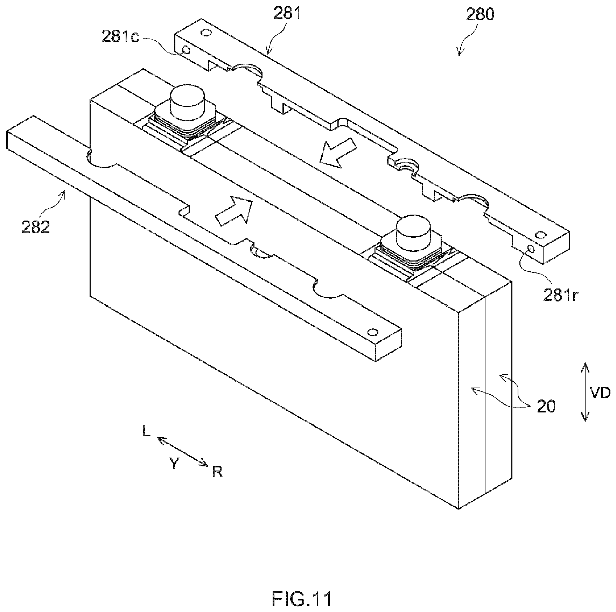

(2-2) Moreover, the spacer 80 is one member in the aforementioned embodiment illustrated in FIG. 7A, for example. However, the present disclosure is not limited to this example. FIG. 11 is an explanatory view of an assembling step according to a second modification. As illustrated in FIG. 11, a spacer 280 includes a first part 281 and a second part 282 that are divided in the short side direction X. In this case, in (step 3) the assembling step, the spacer 280 may be assembled to the first current collecting member so that the first current collecting member is held from both sides in the short side direction X between the first part 281 and the second part 282 of the spacer 280 as indicated by arrows in FIG. 11. In the second modification, similarly to the first modification, a positive electrode side support part 285 supports the surface of the positive electrode current collecting member 50 on the electrode body 20 side and a negative electrode side support part 286 supports the surface of the negative electrode current collecting member 60 on the electrode body 20 side.

In this modification, the first part 281 includes a convex part 281c and a concave part 281r on a surface facing the second part 282. The convex part 281c and the concave part 281r are provided at both end parts in the long side direction Y. Although not illustrated, the second part 282 includes a concave part at a position facing the convex part 281c of the first part 281 and a convex part at a position facing the concave part 281r of the first part 281. Thus, in (step 3) the assembling step, the convex part 281c of the first part 281 is engaged with the concave part of the second part 282 and the convex part of the second part 282 is engaged with the concave part 281r of the first part 281. Accordingly, the first part 281 and the second part 282 are integrated.

### (3) Shape of terminal:

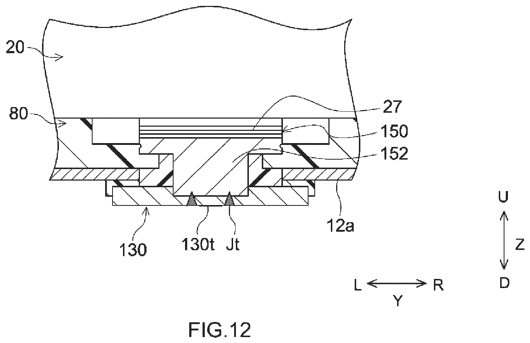

In the aforementioned embodiment illustrated in FIG. 2, for example, the terminal (the positive electrode terminal 30 and/or the negative electrode terminal 40) includes the penetration hole 30h or 40h. However, the present disclosure is not limited to this example. FIG. 12 is a partial enlarged view of the vicinity of a positive electrode terminal 130 in the modification. As illustrated in FIG. 12, the positive electrode terminal 130 includes a thin part 130t. The thin part 130t is provided at a position facing a shaft part 152 of a positive electrode current collecting member 150. In this case, in (step 5) the joining step, the positive electrode terminal 130 and the positive electrode current collecting member 150 are joined (for example, joined by welding) so as to penetrate the thin part 130t of the positive electrode terminal 130; thus, a joining part Jt is formed.

### (4) Attachment of terminal:

For example, in the aforementioned embodiment, the terminal (the positive electrode terminal 30 and/or the negative electrode terminal 40) is attached in advance to the bottom wall 12a of the case main body 12 in (step 1A) the case preparing step. However, the present disclosure is not limited to this example. The terminal can be attached to the bottom wall 12a in (step 5) the joining step, for example. In one example, first, in (step 4) the inserting step, the extraction hole 18 and 19 parts of the bottom wall 12a are sandwiched between the first terminal (the positive electrode terminal 30 or the negative electrode terminal 40) and the first current collecting member (the positive electrode current collecting member 50 or the negative electrode current collecting member 60) from the inside and outside of the case main body 12, and at least a part of the current collecting member is inserted to a first penetration hole (the penetration hole 30h or 40h) of the terminal. Then, in (step 5) the joining step, the first terminal is fixed with a jig from the outside, and the first terminal and the first current collecting member are joined together (for example, joined by welding). Thus, the first terminal can be attached to the bottom wall 12a (through the insulating member as necessary) at substantially the same time as the formation of the joining part J.

As described above, the following items are given as specific aspects of the art disclosed herein.
Item 1: The manufacturing method for the electrical energy storage device including the electrode body that includes the first electrode and the second electrode, the case that accommodates the electrode body, and the first electrode terminal that is electrically connected to the first electrode through the first current collecting member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body, and the spacer disposed between the bottom wall and the electrode body is further provided, the manufacturing method including: the assembling step of disposing the spacer at the end part, on one side, of the electrode body to which the first current collecting member is attached, and integrating the first current collecting member with the spacer; the inserting step of inserting the electrode body integrated with the spacer from the end part on the one side into the case main body; and the joining step of joining the first current collecting member and the first electrode terminal after the inserting step.
Item 2: The manufacturing method according to Item 1, in which in the joining step, the first current collecting member and the first electrode terminal are joined together while the electrode body is pressed to the side of the bottom wall so that the first current collecting member is pressed against the first electrode terminal through the spacer.
Item 3: The manufacturing method according to Item 2, in which the spacer includes the support part that supports the surface of the first current collecting member on the side of the electrode body.
Item 4: The manufacturing method according to any one of Items 1 to 3, in which the spacer includes the penetration hole, and in the assembling step, a part of the first current collecting member penetrates the penetration hole of the spacer.
Item 5: The manufacturing method according to any one of Items 1 to 4, in which the spacer includes the concave part, and in the assembling step, a part of the first current collecting member is engaged with the concave part of the spacer.
Item 6: The manufacturing method according to any one of Items 1 to 5, in which the spacer includes the penetration hole, one of the engagement concave part and the engagement convex part is provided at the inner side wall of the penetration hole, the other of the engagement concave part and the engagement convex part is provided at the outer peripheral side wall of the first current collecting member, and in the assembling step, the engagement concave part and the engagement convex part are engaged with each other.
Item 7: The manufacturing method according to any one of Items 1 to 6, in which one of the protrusion part and the hole part is provided at the bottom wall of the case main body, the other of the protrusion part and the hole part is provided at the surface of the spacer on the side of the bottom wall, and in the inserting step, the protrusion part is inserted into the hole part.
Item 8: The electrical energy storage device including: the electrode body that includes the first electrode and the second electrode; the case that accommodates the electrode body; and the first electrode terminal that is electrically connected to the first electrode through the first current collecting member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body, and the spacer disposed between the bottom wall and the electrode body and integrated with the first current collecting member is further provided.
Item 9: The electrical energy storage device according to Item 8, in which the spacer includes the penetration hole, and a part of the first current collecting member penetrates the penetration hole.
Item 10: The electrical energy storage device according to Item 8 or 9, in which the spacer includes the concave part, and a part of the first current collecting member is engaged with the concave part of the spacer.
Item 11: The electrical energy storage device according to any one of Items 8 to 10, in which the spacer includes the penetration hole, one of the engagement concave part and the engagement convex part is provided at the inner side wall of the penetration hole, the other of the engagement concave part and the engagement convex part is provided at the outer peripheral side wall of the first current collecting member, and the engagement concave part and the engagement convex part are engaged with each other.
Item 12: The electrical energy storage device according to any one of Items 8 to 11, in which the spacer includes the support part that supports the surface of the first current collecting member on the side of the electrode body.
Item 13: The electrical energy storage device according to any one of Items 8 to 12, in which one of the protrusion part and the hole part is provided at the bottom wall of the case main body, the other of the protrusion part and the hole part is provided at the surface of the spacer on the side of the bottom wall, and the protrusion part is inserted into the hole part.

### [Reference Signs List]

- 10: Case
- 12: Case main body
- 12a: Bottom wall
- 12p: Protrusion part
- 14: Sealing plate
- 20: Electrode body
- 22: Positive electrode (first electrode/second electrode)
- 24: Negative electrode (first electrode/second electrode)
- 30: Positive electrode terminal (first electrode terminal)
- 40: Negative electrode terminal
- 50: Positive electrode current collecting member (first current collecting member)
- 51: Flange part
- 52: Shaft part
- 51r: Engagement concave part
- 60: Negative electrode current collecting member
- 80,: 180, 280 Spacer
- 85,: 185 Positive electrode side support part
- 86,: 186 Negative electrode side support part
- 85h,: 86h, 185h, 186h Penetration hole
- 85s, 86s: Step part (concave part)
- 85c: Engagement convex part
- 87: Hole part
- 100: Electrical energy storage device

## Claims

1. A manufacturing method for an electrical energy storage device (100) including an electrode body (20) that includes a first electrode (22) and a second electrode (24), a case (10) that accommodates the electrode body (20), and a first electrode terminal (30) that is electrically connected to the first electrode (22) through a first current collecting member (50), wherein
the case (10) includes a case main body (12) with a bottomed tubular shape that includes a bottom wall (12a), side walls (12b, 12c) provided at an outer periphery of the bottom wall (12a), and an opening (12h) facing the bottom wall (12a), and a sealing plate (14) that seals the opening (12h) of the case main body (12),
the first electrode terminal (30) is attached to the bottom wall (12a) of the case main body (12), and
a spacer (80) disposed between the bottom wall (12a) and the electrode body (20) is further provided,
the manufacturing method comprising:
an assembling step of disposing the spacer (80) at an end part, on one side, of the electrode body (20) to which the first current collecting member (50) is attached, and integrating the first current collecting member (50) with the spacer (80);
an inserting step of inserting the electrode body (20) integrated with the spacer (80) from the end part on the one side into the case main body (12); and
a joining step of joining the first current collecting member (50) and the first electrode terminal (30) after the inserting step.

2. The manufacturing method according to claim 1, wherein in the joining step, the first current collecting member (50) and the first electrode terminal (30) are joined together while the electrode body (20) is pressed to a side of the bottom wall (12a) so that the first current collecting member (50) is pressed against the first electrode terminal (30) through the spacer (80).

3. The manufacturing method according to claim 2, wherein the spacer (80) includes a support part (85s) that supports a surface of the first current collecting member (50) on a side of the electrode body (20).

4. The manufacturing method according to any one of claims 1 to 3, wherein
the spacer (80) includes a penetration hole (85h), and
in the assembling step, a part of the first current collecting member (50) penetrates the penetration hole (85h) of the spacer (80).

5. The manufacturing method according to any one of claims 1 to 4, wherein
the spacer (80) includes a concave part (85s), and
in the assembling step, a part of the first current collecting member (50) is engaged with the concave part (85s) of the spacer (80).

6. The manufacturing method according to any one of claims 1 to 5, wherein
the spacer (80) includes the penetration hole (85h),
one of an engagement concave part (51r) and an engagement convex part (85c) is provided at an inner side wall of the penetration hole (85h),
the other of the engagement concave part (51r) and the engagement convex part (85c) is provided at an outer peripheral side wall of the first current collecting member (50), and
in the assembling step, the engagement concave part (51r) and the engagement convex part (85c) are engaged with each other.

7. The manufacturing method according to any one of claims 1 to 6, wherein one of a protrusion part (12p) and a hole part (87) is provided at the bottom wall (12a) of the case main body (12),
the other of the protrusion part (12p) and the hole part (87) is provided at a surface of the spacer (80) on the side of the bottom wall (12a), and
in the inserting step, the protrusion part (12p) is inserted into the hole part (87).

8. An electrical energy storage device (100) comprising:
an electrode body (20) that includes a first electrode (22) and a second electrode (24);
a case (10) that accommodates the electrode body (20); and
a first electrode terminal (30) that is electrically connected to the first electrode (22) through a first current collecting member (50), wherein
the case (10) includes a case main body (12) with a bottomed tubular shape that includes a bottom wall (12a), side walls (12b, 12c) provided at an outer periphery of the bottom wall (12a), and an opening (12h) facing the bottom wall (12a), and a sealing plate (14) that seals the opening (12h) of the case main body (12),
the first electrode terminal (30) is attached to the bottom wall (12a) of the case main body (12), and
a spacer (80) disposed between the bottom wall (12a) and the electrode body (20) and integrated with the first current collecting member (50) is further provided.

9. The electrical energy storage device (100) according to claim 8, wherein
the spacer (80) includes a penetration hole (85h), and
a part of the first current collecting member (50) penetrates the penetration hole (85h).

10. The electrical energy storage device (100) according to claim 8 or 9, wherein the spacer (80) includes a concave part (85s), and
a part of the first current collecting member (50) is engaged with the concave part (85s) of the spacer (80).

11. The electrical energy storage device (100) according to any one of claims 8 to 10, wherein
the spacer (80) includes the penetration hole (85h),
one of an engagement concave part (51r) and an engagement convex part (85c) is provided at an inner side wall of the penetration hole (85h),
the other of the engagement concave part (51r) and the engagement convex part (85c) is provided at an outer peripheral side wall of the first current collecting member (50), and
the engagement concave part (51r) and the engagement convex part (85c) are engaged with each other.

12. The electrical energy storage device (100) according to any one of claims 8 to 11, wherein the spacer (80) includes a support part (85s) that supports a surface of the first current collecting member (50) on a side of the electrode body (20).

13. The electrical energy storage device (100) according to any one of claims 8 to 12, wherein
one of a protrusion part (12p) and a hole part (87) is provided at the bottom wall (12a) of the case main body (12),
the other of the protrusion part (12p) and the hole part (87) is provided at a surface of the spacer (80) on the side of the bottom wall (12a), and
the protrusion part (12p) is inserted into the hole part (87).
